# EUROPÄISCHE PATENTSCHRIFT

(11) **EP 3 122 599 B1**
(45) Veröffentlichungstag und Bekanntmachung des Hinweises auf die Patenterteilung: **23.05.2018**
(21) Anmeldenummer: 15712332.4
(22) Anmeldetag: 23.03.2015
(51) Int. Cl.: B60R 19/18, B60R 19/26

(54) **ANORDNUNG ZUM ABSORBIEREN VON BEWEGUNGSENERGIE**
ARRANGEMENT FOR ABSORBING KINETIC ENERGY
ENSEMBLE SERVANT À ABSORBER DE L'ÉNERGIE CINÉTIQUE

(30) Priorität: 24.03.2014 DE 102014205412
(43) Veröffentlichungstag der Anmeldung: 01.02.2017
(73) Patentinhaber: Bayerische Motoren Werke Aktiengesellschaft, 80809 München (DE)
(72) Erfinder: KOESTLER, Ulrich, 85241 Hebertshausen (DE); KÖHLER, Arne, 85652 Pliening (DE); RIEDL, Wilhelm, 85276 Pfaffenhofen (DE); RUDOLPH, Tim, 81543 München (DE)
(86) Internationale Anmeldenummer: PCT/EP2015/056103
(87) Internationale Veröffentlichungsnummer: WO 2015/144629

(56) Entgegenhaltungen:
- DE-A1- 10 257 262
- DE-A1-102010 054 639

## Beschreibung

Die Erfindung betrifft eine Anordnung zum Absorbieren von auf einen frontseitigen Stoßfänger eines Fahrzeugs, insbesondere Kraftfahrzeugs, einwirkender Bewegungsenergie.

Des Weiteren betrifft die Erfindung ein Stoßfängersystem für ein Fahrzeug, insbesondere Kraftfahrzeug, aufweisend wenigstens einen frontseitig an dem Fahrzeug anordbaren, einen Querträger umfassenden Stoßfänger.

Aus der DE 102010054639 A1, die den Oberbegriff des Anspruchs 1 bildet, ist eine Stoßfängeranordnung für ein Kraftfahrzeug bekannt, die einen Querträger mit an dem Querträger angeordneten Crashboxen aufweist. In dem Fußgängerschutzelement ist ein Deformationselement angeordnet. Der Querträger weist eine Öffnung auf, in der das Deformationselement zumindest abschnittsweise, insbesondere mit einem Fußbereich, angeordnet ist. Das Deformationselement ist in die Öffnung einschiebbar, sodass nur das Fußgängerschutzelement bei einem Anprall mit einem Fußgänger dämpfend wirkt. Im Bereich der Öffnung ist ein Verriegelungsmittel zur Begrenzung eines Verschiebeweges des Deformationselementes angeordnet. Das Verriegelungsmittel weist ein aktives Stellglied auf. Durch das Verriegelungsmittel kann das Deformationselement in seiner Absorptionsstellung zeitweilig arretiert werden. Ferner ist das Deformationselement in seiner Absorptionsstellung bei einer Krafteinleitung in den Stoßfänger parallel zu dem Fußgängerschutzelement geschaltet.

Aus der Offenlegungsschrift DE 10 2008 048 678 A1 ist eine Vorrichtung zum Absorbieren von Bewegungsenergie zum Einbau in einem Frontbereich eines Kraftfahrzeugs bekannt. Die Vorrichtung umfasst ein stationäres Bauteil und ein relativ zu dem stationären Bauteil bewegliches Bauteil. Die beiden Bauteile können über eine Kopplungseinrichtung derart miteinander verbunden werden, dass bei nicht aktiver Kopplungseinrichtung die beiden Bauteile im Wesentlichen ohne oder nur mit geringer Energieumwandlung relativ zueinander bewegbar sind und dass bei aktiver Kopplungseinrichtung die Kräfte von einem Bauteil auf das andere übertragen werden. Ab einem vorbestimmten Kraftniveau verformt sich eines der beiden Bauteile gezielt plastisch. Die beiden Bauteile sind bezüglich einer Krafteinleitung in die Vorrichtung in Reihe zueinander geschaltet.

Die Druckschrift US 2012/0323447 A1 betrifft eine Stoßfängeranordnung für ein Fahrzeug, aufweisend einen Querträger mit Crash-Boxen und ein an dem Querträger angeordnetes Fußgängerschutzelement. Das Fußgängerschutzelement hat eine geringere Steifigkeit als der Querträger. In dem Fußgängerschutzelement ist ein Deformationselement angeordnet, dass bei einem Unfall mit einem Fußgänger in den Querträger zurückgezogen werden kann, so dass nur das Fußgängerschutzelement einen Dämpfungseffekt bewirkt. Bei einem Unfall mit größeren Bewegungsenergien kann das Deformationselement starr mit dem Querträger verbunden werden, wodurch der zur Verfügung stehende Deformationspfad verlängert wird. Das Fußgängerschutzelement ist dabei bezüglich der Krafteinleitung in die Stoßfängeranordnung parallel zu dem Deformationselement geschaltet.

Die Offenlegungsschrift DE 10 2005 021 725 A1 offenbart ein Sicherheitsbauteil für ein Kraftfahrzeug, wobei das Sicherheitsbauteil mittels einer Verlagerungseinrichtung zwischen einer Grundstellung und einer Kollisionsstellung verlagerbar ist. Es ist eine Sensoreinrichtung vorhanden, mittels der eine bevorstehende und/oder erfolgte Kollision des Fahrzeugs erfassbar ist. In einer Steuereinrichtung ist eine Mehrzahl von Kollisions-Algorithmen abgelegt, die in Abhängigkeit von Kollisionsparametern zur Verlagerung des Sicherheitsbauteils in eine vorgegebene Kollisionsposition selektiv aktivierbar sind.

Aufgabe der Erfindung ist es, eine variable, platzsparende und effektive Möglichkeit zur Absorption von Bewegungsenergie in einem Kollisionsfall eines Fahrzeugs bereitzustellen.

Diese Aufgabe wird durch eine Anordnung gemäß Patentanspruch 1 und ein Stoßfängersystem gemäß Patentanspruch 5 gelöst. Vorteilhafte Ausgestaltungen sind in den Unteransprüchen wiedergegeben, welche jeweils für sich genommen oder in verschiedener Kombinationen miteinander einen Aspekt der Erfindung darstellen können.

Erfindungsgemäß wird eine Anordnung zum Absorbieren von auf einen frontseitigen Stoßfänger eines Fahrzeugs, insbesondere Kraftfahrzeugs, einwirkender Bewegungsenergie wie im Anspruch 1 vorgeschlagen. Durch die erfindungsgemäße Parallelschaltung des wenigstens einen Absorptionselementes zu dem Fußgängerschutzelement bezüglich einer durch die Bewegungsenergie bedingten Krafteinleitung in den Stoßfänger kann die erfindungsgemäße Anordnung platzsparend ausgebildet werden, um Bauraum einzusparen, was sich insbesondere vorteilhaft auf den Gestaltungsspielraum beim Design eines mit einer erfindungsgemäßen Anordnung ausgestatteten Fahrzeugs auswirkt.

Die erfindungsgemäße Anordnung kann auch zwei oder mehrere an dem Querträger des Stoßfängers anordbare Fußgängerschutzelemente aufweisen. Auch kann die erfindungsgemäße Anordnung zwei oder mehrere an dem Querträger anordbare, in Längsrichtung des Fahrzeugs relativ zu dem Querträger jeweils zwischen einer vorderen Absorptionsstellung und einer hinteren Freigabestellung bewegbar an dem Querträger anordbare Absorptionselemente aufweisen. Zudem kann die erfindungsgemäße Anordnung auch zwei oder mehrere Verriegelungseinrichtungen aufweisen. Durch die zeitweilige Arretierung des Absorptionselementes in seiner Absorptionsstellung mittels der an dem Querträger anordbaren Verriegelungseinrichtung kann in einem Kollisionsfall eines mit der erfindungsgemäßen Anordnung ausgestatteten Fahrzeugs eine variable und effektive Absorption von Bewegungsenergie erfolgen. Insbesondere kann die Arretierung des Absorptionselements in seiner Absorptionsstellung im Falle einer absehbaren oder erfolgenden Kollision des Fahrzeugs mit einem Fußgänger gelöst sein, so dass sich das Absorptionselement im Wesentlichen frei in die hintere Freigabestellung verlagern kann. Dies bewirkt, dass eine Kraftübertragung auf einen Fußgänger nicht über das Absorptionselement, sondern allein über das Fußgängerschutzelement erfolgt. Hingegen kann das Absorptionselement in seiner Absorptionsstellung im Falle einer absehbaren oder erfolgenden Kollision des Fahrzeugs mit einem weiteren Fahrzeug oder einem anderen Objekt mittels der Verriegelungseinrichtung arretiert werden, so dass eine Kraftübertragung zwischen den miteinander kollidierenden Fahrzeugen bzw. zwischen dem Fahrzeug und dem Objekt im Wesentlichen über das Absorptionselement und in deutlich geringerem Ausmaß auch über das Fußgängerschutzelement erfolgt. Die Anordnung erfüllt somit gegebene Fußgängerschutz-Anforderungen.

Die Verriegelungseinrichtung kann wenigstens ein Verriegelungselement und eine damit zusammenwirkende, ansteuerbare Aktoreinheit aufweisen. Die Aktoreinheit kann beispielsweise einen Stellmotor, einen Hubmagneten, einen Elektromotor mit Feder, eine Hydraulikeinheit, eine Pneumatikeinheit oder dergleichen aufweisen.

Das Absorptionselement kann teilweise oder vollständig aus Metall oder einem, insbesondere faserverstärkten, Verbundwerkstoff gebildet sein.

Gemäß einer vorteilhaften Ausgestaltung weist das Absorptionselement zumindest in Richtung der Krafteinleitung eine geringere Steifigkeit als der Querträger auf. Vorzugsweise weist auch eine durch das Absorptionselement und das Fußgängerschutzelement gebildete Baugruppe eine geringere Steifigkeit als der Querträger auf. Hierdurch kommt es bei einem Kollisionsfall mit einem anderem Fahrzeug oder einem anderen Objekt mit in seiner Absorptionsstellung arretiertem Absorptionselement zunächst zu einer plastischen Deformation des Absorptionselementes. Erst bei weiterer Krafteinteitung kann es auch zu einer plastischen Deformation des Querträgers oder diesem bezüglich der Krafteinleitung nachgeschalteten Bauteilen des Fahrzeugs oder des Stoßfängers kommen. Bei einem erwarteten Fußgängeraufprall ist das Absorptionselement nicht in seiner Absorptionsstellung arretiert, wodurch das Absorptionselement in Richtung seiner Ruhestellung verlagert und nicht deformiert wird. In diesem Fall wird allein das Fußgängerschutzelement deformiert.

Nach der Erfindung umfasst die Anordnung wenigstens zwei Absorptionselemente, wobei zumindest ein Absorptionselement oberhalb des Fußgängerschutzelementes und zumindest ein weiteres Absorptionselement unterhalb des Fußgängerschutzeiementes angeordnet ist. Durch diese Anordnung der Absorptionselemente können in einem Kollisionsfall mit einem anderem Fahrzeug oder einem anderen Objekt auftretende Kräfte bei in seiner Absorptionsstellung arretiertem Absorptionselement optimal von der Anordnung aufgefangen werden, um eine plastische Deformation von den Absorptionselementen bezüglich der Krafteinleitung nachgeschalteten Bauteilen weitestgehend zu verhindern. Dieser Effekt wird mit einer steigenden Anzahl von vorhandenen Absorptionselementen verstärkt. Bei einem erwarteten Fußgängeraufprall sind die Absorptionselemente nicht in ihren Absorptionsstellungen arretiert, wodurch die Absorptionselemente in Richtung ihrer Ruhestellungen verlagert und nicht deformiert werden. In diesem Fall wird allein das Fußgängerschutzelement deformiert.

Eine weitere vorteilhafte Ausgestaltung sieht vor, dass die Anordnung wenigstens zwei Absorptionselemente umfasst, wobei zumindest ein Absorptionselement über oder unter dem Fußgängerschutzelement angeordnet und zumindest ein weiteres Absorptionselement im Bereich einer Anbindung des Querträgers an ein weiteres Bauteil des Fahrzeugs oder des Stoßfängers anordbar ist. Auch können wenigstens drei Absorptionselemente vorhanden sein, von denen zumindest eines oberhalb des Fußgängerschutzelementes, zumindest eines unterhalb des Fußgängerschutzelementes und zumindest eines im Bereich einer Anbindung des Querträgers an ein weiteres Bauteil des Fahrzeugs oder des Stoßfängers anordbar ist. Es kann auch im Bereich jeder Anbindung des Querträgers an jeweils ein weiteres Bauteil des Fahrzeugs bzw. des Stoßfängers jeweils wenigstens ein Absorptionselement angeordnet sein. Das im Bereich einer Anbindung des Querträgers an ein weiteres Bauteil des Fahrzeugs oder des Stoßfängers anordbare Absorptionselement kann beispielsweise bolzenförmig ausgebildet sein.

Es wird des Weiteren als vorteilhaft erachtet, wenn das Fußgängerschutzelement zumindest teilweise aus einem Schaumstoff gebildet ist. Alternativ kann das Fußgängerschutzelement zumindest teilweise aus einem Elastomer oder dergleichen ausgebildet sein.

Weiter erfindungsgemäß wird ein Stoßfängersystem für ein Fahrzeug, insbesondere Kraftfahrzeug, vorgeschlagen, aufweisend wenigstens einen frontseitig an dem Fahrzeug anordbaren, einen Querträger umfassenden Stoßfänger, gekennzeichnet durch wenigstens eine Anordnung nach einer der vorgenannten Ausgestaltungen oder einer beliebigen Kombination derselben. Mit diesem Stoßfängersystem sind die oben mit Bezug auf die Anordnung genannten Vorteile entsprechend verbunden.

Nach einer vorteilhaften Ausgestaltung umfasst das Stoßfängersystem wenigstens eine elektronische Steuerung, über welche die Verriegelungseinrichtung ansteuerbar ist, wobei die elektronische Steuerung eingerichtet ist, die Verriegelungseinrichtung in Abhängigkeit einer Geschwindigkeit des Fahrzeugs und einer sensorischen Erfassung eines vor dem Fahrzeug angeordneten Hindernisses zu verriegeln bzw. zu entriegeln. Die elektronische Steuerung kann als separate Baueinheit oder durch eine fahrzeugseitig bereits vorhandene elektronische Einrichtung ausgebildet sein. Die sensorische Erfassung eines vor dem Fahrzeug vorhandenen Hindernisses kann mittels einer geeigneten Sensoreinrichtung, beispielsweise einer Abstandssensorik in Form eines Abstandsradars, einer Einparkhilfesensorik, einer Stereo-Kamera oder dergleichen, erfolgen. Die Sensoreinrichtung kann Teil des Stoßfängersystems oder bereits an einem Fahrzeug vorhanden sein.

Gemäß einer weiteren vorteilhaften Ausgestaltung ist die elektronische Steuerung eingerichtet, die Verriegelungseinrichtung ausschließlich aus einem das Absorptionselement nicht in seiner Absorptionsstellung arretierenden Freigabezustand in einen das Absorptionselement in seiner Absorptionsstellung arretierenden Verriegelungszustand zu überführen, wenn
- sich das Fahrzeug im Parkzustand befindet,
- sich das Fahrzeug beim erstmaligen Anfahren im Geschwindigkeitsbereich 0 km/h bis 20 km/h befindet,
- sich das Fahrzeug mit eingelegtem Rückwärtsgang bzw. im Leerlauf befindet, anschließend wie erstmaliges Anfahren,
- sich das Fahrzeug mit einer Geschwindigkeit im Bereich von 0 km/h bis 20 km/h bewegt und gleichzeitig ein Hindernis vor dem Fahrzeug erfasst wird, und/oder
- sich das Fahrzeug mit einer Geschwindigkeit im Bereich von 55 km/h bis 80 km/h bewegt und gleichzeitig ein Hindernis vor dem Fahrzeug erfasst wird, und/oder
- sich das Fahrzeug mit einer Geschwindigkeit im Bereich von 80 km/h bis zur maximalen Fahrzeuggeschwindigkeit bewegt.

Hierdurch wird Fußgängerschutz-Anforderungen entsprochen und gleichzeitig ein Stoßfängersystem bereitgestellt, welches an verschiedene Belastungssituationen anpassbar ist. Zudem ist die Verriegelungseinrichtung hiernach im Stadtverkehr und auf einer Landstraße in ihrem inaktiven Freigabezustand und wird lediglich zur Herstellung ihres Verriegelungszustandes aktiviert, was mit möglichst wenigen Lastwechseln über die Lebensdauer der Verriegelungseinrichtung einhergeht. Dadurch ist das Stoßfängersystem hinsichtlich der Fußgängerschutz-Anforderungen ausfallsicher ausgebildet. Da sich die Verriegelungseinrichtung im Parkzustand des Fahrzeugs in ihrem Verriegelungszustand befindet, können über das Absorptionselement auch Parkrempler von anderen Fahrzeugen aufgefangen werden. Da sich die Verriegelungseinrichtung im Verriegelungszustand befindet, wenn sich das Fahrzeug mit einer Geschwindigkeit im Bereich von 0 km/h bis 20 km/h bewegt und gleichzeitig ein Hindernis vor dem Fahrzeug erfasst wird, kann zudem das Absorptionselement bei einem Stop-and-Go-Fahrbetrieb in seiner im Parkzustand eingenommenen Absorptionsstellung verriegelt bleiben und somit einer geringeren Anzahl an Lastwechseln unterliegen. Alternativ kann die Verriegelungseinrichtung mittels der elektronischen Steuerung in ihren Verriegelungszustand überführt werden wenn sich das Fahrzeug mit einer Geschwindigkeit im Bereich von 55 km/h bis 80 km/h bewegt und ein Hindernis vor dem Fahrzeug erfasst wird, wohingegen sich die Verriegelungseinrichtung bei einer Geschwindigkeit über 80 km/h auch ohne Erfassung eines Hindernisses vor dem Fahrzeug immer in ihrem Verriegelungszustand befindet. Ferner kann eine Entriegelung der Verriegelungseinrichtung bei einer Unterschreitung von 55 km/h von Vorteil sein, was mit einer geringeren Betätigung der Verriegelungseinrichtung und somit mit weniger Lastwechseln einhergehen würde.

Eine weitere vorteilhafte Ausgestaltung sieht vor, dass die elektronische Steuerung zum Erfassen des Zustands der Verriegelungseinrichtung eingerichtet ist. Insbesondere kann mittels der elektronischen Steuerung erfasst werden, ob sich die Verriegelungseinrichtung in ihrem Verriegelungszustand oder in ihrem Freigabezustand befindet. Die Erfassung des jeweiligen Zustands der Verriegelungseinrichtung macht eine Erkennung von Fehlfunktionen möglich. Die Erfassung des jeweiligen Zustands der Verriegelungseinrichtung kann über einen Schalter, über Stromerkennung oder dergleichen erfolgen. Hierdurch ist das Stoßfängersystem diagnosefähig, was bedeutet, dass auch ein Kabelbruch erkannt und beispielsweise über ein Display angezeigt werden kann.

Vorteilhafterweise umfasst das Stoßfängersystem wenigstens zwei Deformationselemente, über die der Querträger mit weiteren Bauteilen des Fahrzeugs verbunden ist. Die Deformationselemente können als Crash-Boxen ausgebildet sein und den Querträger mit Motorlängsträgern verbinden. Weitere Einzelheiten, Merkmale und Vorteile der Erfindung ergeben sich aus der nachfolgenden Beschreibung und den Figuren. Es zeigen:
- Figur 1: eine schematische Schnittdarstellung eines mit einem herkömmlichen Stoßfängersystem ausgestatteten Fahrzeugs,
- Figur 2: eine schematische Schnittdarstellung eines mit einem Ausführungsbeispiel für ein erfindungsgemäßes Stoßfängersystem ausgestatteten Fahrzeugs,
- Figur 3: eine schematische Draufsicht auf ein Ausführungsbeispiel für ein erfindungsgemäßes Stoßfängersystem,
- Figur 4: eine schematische Draufsicht auf das in Figur 3 gezeigte Ausführungsbeispiel unmittelbar bevor einer Kollision mit einem Fußgänger,
- Figur 5: eine schematische Draufsicht auf das in Figur 3 gezeigte Ausführungsbeispiel während einer Kollision mit einem Fußgänger,
- Figur 6: eine schematische Draufsicht auf das in Figur 3 gezeigte Ausführungsbeispiel unmittelbar bevor einer Kollision mit einer Barriere,
- Figur 7: eine schematische Draufsicht auf das in Figur 3 gezeigte Ausführungsbeispiel während einer Kollision mit einer Barriere.

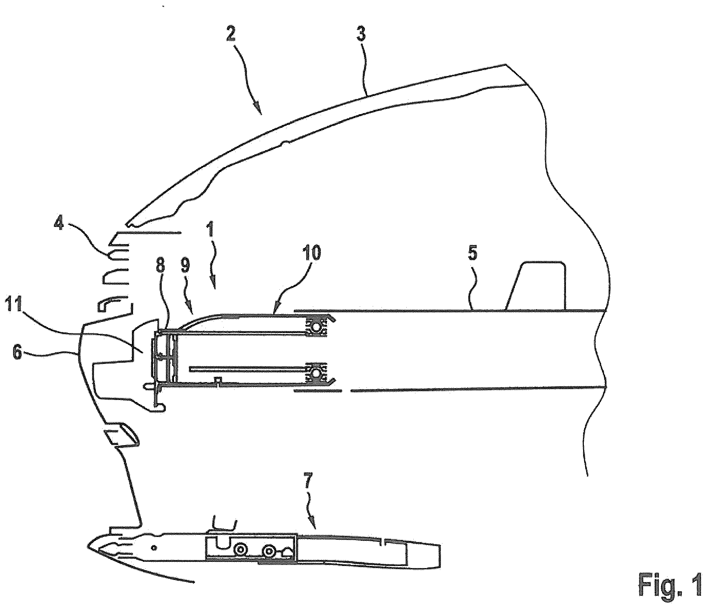

Figur 1 zeigt eine schematische Schnittdarstellung eines mit einem herkömmlichen Stoßfängersystem 1 ausgestatteten Fahrzeugs 2 im Ausschnitt. Es sind eine Motorhaube 3, ein Kühlergrill 4, ein Motorlängsträger 5 und eine Stoßfängerverkleidung 6 des Fahrzeugs 2 dargestellt. Im unteren Bereich des Fahrzeugs 2 ist eine separate Fußgängerschutzeinrichtung 7 zu sehen, deren Funktionsweise bekannt und für die Erfindung nicht weiter von Bedeutung ist. Eine solche Fußgängerschutzeinrichtung 7 weist ein Deformationselement auf, über das bei einem Unfall über das Deformationselement punktuell aufgenommene Kräfte in eine nachgeschaltete Crash-Box übertragen werden können. Hierbei ist das Deformationselement zur Ausbildung des Fußgängerschutzes gezielt relativ zur Crash-Box verlagerbar angeordnet. Im Falle eines Unfalls kann es bei einer solchen gezielten Verlagerung des Deformationselementes zu einem Verkanten des Deformationselementes relativ zu einer zum Verlagern des Deformationselementes vorgesehenen Führungseinrichtung, beispielsweise der Crash-Box oder einer daran angeordneten Führungsaufnahme kommen, so dass ein gezieltes Verlagern des Deformationselementes nicht mehr möglich ist.

Das Stoßfängersystem 1 umfasst einen frontseitig an dem Fahrzeug 2 angeordneten, einen Querträger 8 umfassenden frontseitigen Stoßfänger 9. Des Weiteren umfasst das Stoßfängersystem 1 zwei Deformationselemente 10, von denen in Figur 1 nur ein Deformationselement 10 dargestellt ist und über die der Querträger 8 mit den Motorlängsträgern 5 des Fahrzeugs 2 verbunden ist. An dem Querträger 8 ist ein Fußgängerschutzelement 11 angeordnet.

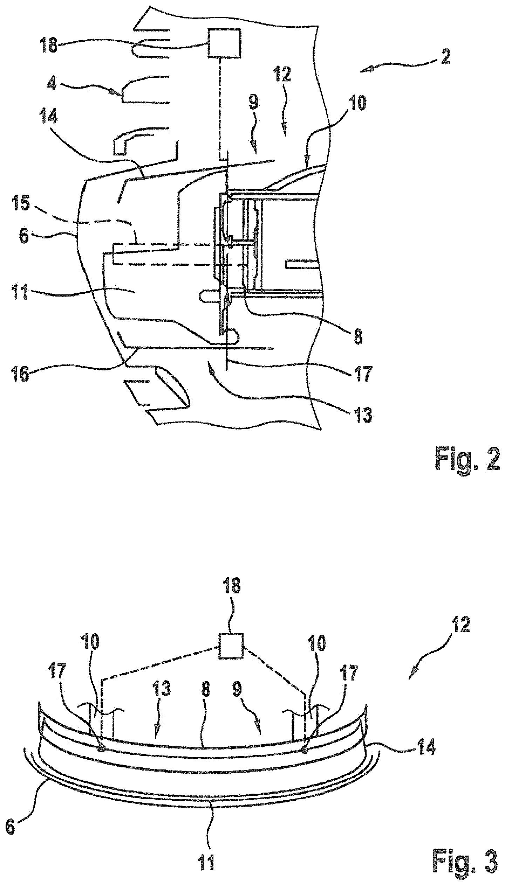

Figur 2 zeigt eine schematische Schnittdarstellung eines mit einem Ausführungsbeispiel für ein erfindungsgemäßes Stoßfängersystem 12 ausgestatteten Fahrzeugs 2. Das Stoßfängersystem 12 umfasst einen frontseitig an dem Fahrzeug 2 angeordneten, einen Querträger 8 umfassenden frontseitigen Stoßfänger 9 sowie eine Anordnung 13 zum Absorbieren von auf den frontseitigen Stoßfänger 9 einwirkender Bewegungsenergie. Des Weiteren umfasst das Stoßfängersystem 12 zwei Deformationselemente 10, von denen in Figur 2 nur ein Deformationselement 10 dargestellt ist und über die der Querträger 8 mit den Motorlängsträgern 5 des Fahrzeugs 2 verbunden ist.

Die Anordnung 13 umfasst ein an dem Querträger 8 angeordnetes Fußgängerschutzelement 11. Des Weiteren umfasst die Anordnung 13 vier an dem Querträger 8 angeordnete, in Längsrichtung des Fahrzeugs 2 relativ zu dem Querträger 8 jeweils zwischen einer in Figur 2 gezeigten vorderen Absorptionsstellung und einer hinteren Freigabestellung bewegbar an dem Querträger 8 angeordnete Absorptionselemente 14, 15 und 16. Es sind zwei bolzenförmig und gleich ausgebildete Absorptionselemente 15 vorhanden, von denen in Figur 2 nur ein Absorptionselement 15 dargestellt ist. Die Absorptionselemente 15 sind optional und daher durch gestrichelte Linien dargestellt ist. Das Absorptionselement 14 ist oberhalb des Fußgängerschutzelementes 11, das Absorptionselement 16 ist unterhalb des Fußgängerschutzelementes 11 und die Absorptionselemente 15 sind jeweils im Bereich einer Anbindung des Querträgers 8 an ein Deformationselement 10 angeordnet. Die Absorptionselemente 14, 15 und 16 weisen zumindest in Richtung der Krafteinleitung eine geringere Steifigkeit als der Querträger 8 auf.

Die Anordnung 13 umfasst des Weiteren zwei durch eine Linie angedeutete, an dem Querträger 8 angeordnete Verriegeiungseinrichtung 17, mittels der die Absorptionselemente 14, 15 und 16 in ihren in Figur 2 gezeigten Absorptionsstellungen zeitweilig arretierbar sind und von denen in Figur 2 nur eine Verriegelungseinrichtung 17 gezeigt ist. Es ist in Figur 2 des Weiteren zu erkennen, dass die Absorptionselemente 14, 15 und 16 in ihren Absorptionsstellungen bezüglich einer durch die Bewegungsenergie bedingten Krafteinleitung in den Stoßfänger 9 parallel zu dem Fußgängerschutzelement 11 geschaltet sind.

Das Stoßfängersystem 12 umfasst des Weiteren eine elektronische Steuerung 18, über welche die Verriegelungseinrichtungen 17 ansteuerbar sind, wobei die elektronische Steuerung 18 eingerichtet ist, die Verriegelungseinrichtungen 17 in Abhängigkeit einer Geschwindigkeit des Fahrzeugs 2 und einer sensorischen Erfassung eines vor dem Fahrzeug 2 angeordneten Hindernisses zu verriegeln bzw. zu entriegeln. Des Weiteren ist die elektronische Steuerung 18 eingerichtet, die Verriegelungseinrichtungen 17 ausschließlich aus einem die Absorptionselemente 14, 15 und 16 nicht in ihren Absorptionsstellungen arretierenden Freigabezustand in einen die Absorptionselemente 14, 15 und 16 in ihren Absorptionsstellungen arretierenden Verriegelungszustand zu überführen, wenn
- sich das Fahrzeug 2 im Parkzustand befindet,
- sich das Fahrzeug 2 beim erstmaligen Anfahren im Geschwindigkeitsbereich 0 km/h bis 20 km/h befindet,
- sich das Fahrzeug 2 mit eingelegtem Rückwärtsgang bzw. im Leerlauf befindet, anschließend wie erstmaliges Anfahren,
- sich das Fahrzeug 2 mit einer Geschwindigkeit im Bereich von 0 km/h bis 20 km/h bewegt und gleichzeitig ein Hindernis vor dem Fahrzeug 2 erfasst wird, und/oder
- sich das Fahrzeug 2 mit einer Geschwindigkeit im Bereich von 55 km/h bis 80 km/h bewegt und gleichzeitig ein Hindernis vor dem Fahrzeug 2 erfasst wird, und/oder
- sich das Fahrzeug 2 mit einer Geschwindigkeit im Bereich von 80 km/h bis zur maximalen Fahrzeuggeschwindigkeit bewegt.

Ferner ist die elektronische Steuerung 18 zum Erfassen der Zustände der Verriegelungseinrichtungen 17 eingerichtet.

Figur 3 zeigt eine schematische Draufsicht auf ein Ausführungsbeispiel für ein erfindungsgemäßes Stoßfängersystem 12, welches entsprechend dem in Figur 2 gezeigten Stoßfängersystem 12 ausgebildet sein kann.

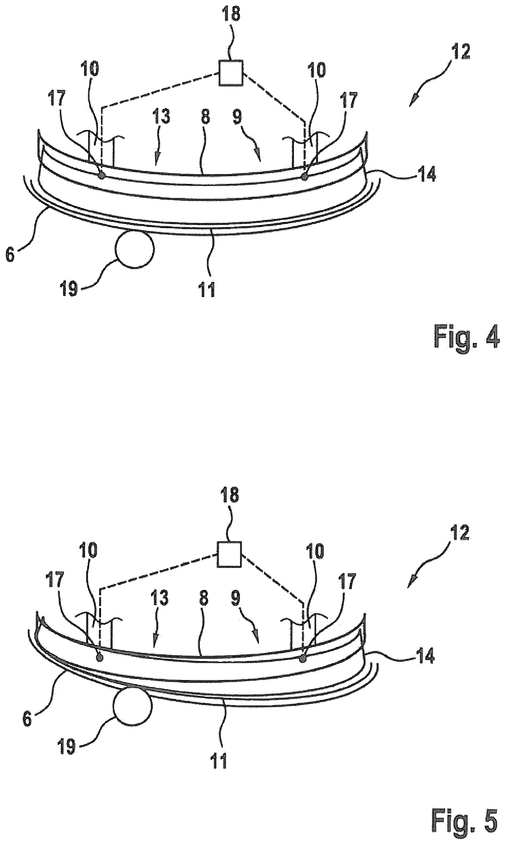

Figur 4 zeigt eine schematische Draufsicht auf das in Figur 3 gezeigte Ausführungsbeispiel unmittelbar bevor einer Kollision mit einem Fußgänger, von dem in Figur 4 lediglich ein Bein 19 angedeutet ist. Die Verriegelungseinrichtungen 17 befinden sich in ihren Freigabezuständen.

Figur 5 zeigt eine schematische Draufsicht auf das in Figur 3 gezeigte Ausführungsbeispiel während einer Kollision mit einem Fußgänger, von dem in Figur 5 lediglich ein Bein 19 dargestellt ist. Durch die Kollision mit dem Fußgänger werden die Stoßfängerverkleidung 6 und das Fußgängerschutzelement 11 aufeinander abgestimmt und gezielt verformt.

Zudem wird das Absorptionselement 14, und eventuell weitere vorhandene Absorptionselemente 15 und 16, von seiner vorderen Absorptionsstellung in seine hintere Freigabestellung verlagert, so dass Kräfte von dem Fahrzeug 2 zur Erfüllung von Fußgängerschutz-Anforderungen lediglich über die Stoßfängerverkleidung 6 und das Fußgängerschutzelement 11 auf den Fußgänger übertragen werden.

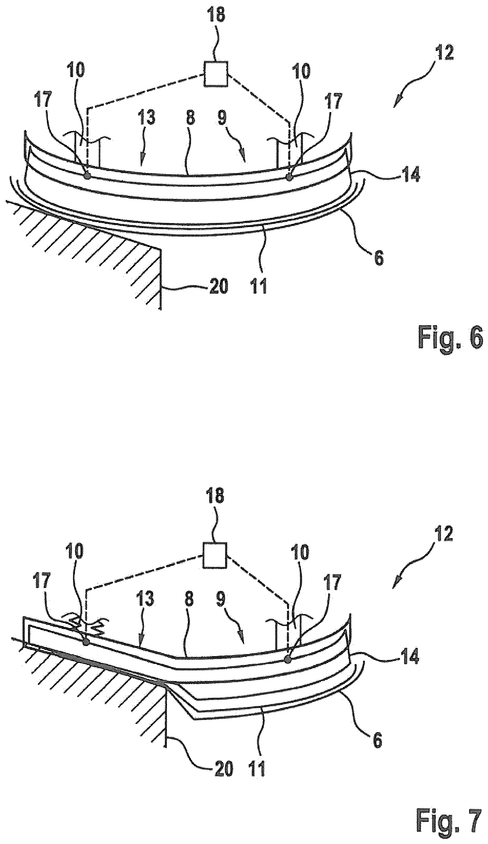

Figur 6 zeigt eine schematische Draufsicht auf das in Figur 3 gezeigte Ausführungsbeispiel unmittelbar bevor einer Kollision mit einer Barriere 20. Die Verriegelungseinrichtungen 17 befinden sich in ihren Verriegelungszuständen, sind also durch die elektronische Steuerung 18 aktiviert.

Figur 7 zeigt eine schematische Draufsicht auf das in Figur 3 gezeigte Ausführungsbeispiel während einer Kollision mit einer Barriere 20. Durch die Kollision mit der Barriere 20 werden die Stoßfängerverkleidung 6, das Fußgängerschutzelement 11, das Absorptionselement 14, der Querträger 8 und das links gezeigte Deformationselement 10 aufeinander abgestimmt und gezielt verformt.

### Bezugszeichenliste:

- 1: Stoßfängersystem
- 2: Fahrzeug
- 3: Motorhaube
- 4: Kühlergrill
- 5: Motorlängsträger
- 6: Stoßfängerverkleidung
- 7: Fußgängerschutzeinrichtung
- 8: Querträger
- 9: Stoßfänger
- 10: Deformationselement
- 11: Fußgängerschutzelement
- 12: Stoßfängersystem
- 13: Anordnung
- 14: Absorptionselement
- 15: Absorptionselement
- 16: Absorptionselement
- 17: Verriegelungseinrichtung
- 18: elektronische Steuerung
- 19: Bein
- 20: Barriere

## Patentansprüche

1. Anordnung (13) zum Absorbieren von auf einen frontseitigen Stoßfänger (9) eines Fahrzeugs (2), insbesondere Kraftfahrzeugs, einwirkender Bewegungsenergie, aufweisend
- wenigstens ein an einem Querträger (8) des Stoßfängers (9) anordbares Fußgängerschutzelement (11),
- wenigstens ein an dem Querträger (8) anordbares, in Längsrichtung des Fahrzeugs (2) relativ zu dem Querträger (8) zwischen einer vorderen Absorptionsstellung und einer hinteren Freigabestellung bewegbar an dem Querträger (8) anordbares Absorptionselement (14, 15, 16) und
- wenigstens eine an dem Querträger (8) anordbare Verriegelungseinrichtung (17), mittels der das Absorptionselement (14, 15, 16) in seiner Absorptionsstellung zeitweilig arretierbar ist,
- wobei das Absorptionselement (14, 15, 16) in seiner Absorptionsstellung bezüglich einer durch die Bewegungsenergie bedingten Krafteinleitung in den Stoßfänger (9) parallel zu dem Fußgängerschutzelement (11) geschaltet ist,
**gekennzeichnet durch** wenigstens zwei Absorptionselemente (14, 16), wobei zumindest ein Absorptionselement (14) oberhalb des Fußgängerschutzelementes (11) und zumindest ein weiteres Absorptionselement (16) unterhalb des Fußgängerschutzelementes (11) angeordnet ist.

2. Anordnung (13) nach Anspruch 1, **dadurch gekennzeichnet, dass** das Absorptionselement (14, 15, 16) zumindest in Richtung der Krafteinleitung eine geringere Steifigkeit als der Querträger (8) aufweist.

3. Anordnung (13) nach Anspruch 1 oder 2, **gekennzeichnet durch** wenigstens zwei Absorptionselemente (14, 15, 16), wobei zumindest ein Absorptionselement (14, 16) über oder unter dem Fußgängerschutzelement (11) angeordnet und zumindest ein weiteres Absorptionselement (15) im Bereich einer Anbindung des Querträgers (8) an ein weiteres Bauteil des Fahrzeugs (2) oder des Stoßfängers (9) anordbar ist.

4. Anordnung (13) nach einem der Ansprüche 1 bis 3, **dadurch gekennzeichnet, dass** das Fußgängerschutzelement (11) zumindest teilweise aus einem Schaumstoff gebildet ist.

5. Stoßfängersystem (12) für ein Fahrzeug (2), insbesondere Kraftfahrzeug, aufweisend wenigstens einen frontseitig an dem Fahrzeug (2) anordbaren, einen Querträger (8) umfassenden Stoßfänger (9), **gekennzeichnet durch** wenigstens eine Anordnung (13) nach einem der Ansprüche 1 bis 5.

6. Stoßfängersystem (12) nach Anspruch 5, **gekennzeichnet durch** wenigstens eine elektronische Steuerung (18), über welche die Verriegelungseinrichtung (17) ansteuerbar ist, wobei die elektronische Steuerung (18) eingerichtet ist, die Verriegelungseinrichtung (17) in Abhängigkeit einer Geschwindigkeit des Fahrzeugs (2) und einer sensorischen Erfassung eines vor dem Fahrzeug (2) angeordneten Hindernisses zu verriegeln bzw. zu entriegeln.

7. Stoßfängersystem (12) nach Anspruch 6, **dadurch gekennzeichnet, dass** die elektronische Steuerung (18) eingerichtet ist, die Verriegelungseinrichtung (17) ausschließlich aus einem das Absorptionselement (14, 15, 16) nicht in seiner Absorptionsstellung arretierenden Freigabezustand in einen das Absorptionselement (14, 15, 16) in seiner Absorptionsstellung arretierenden Verriegelungszustand zu überführen, wenn
- sich das Fahrzeug (2) im Parkzustand befindet,
- sich das Fahrzeug (2) beim erstmaligen Anfahren im Geschwindigkeitsbereich 0 km/h bis 20 km/h befindet,
- sich das Fahrzeug (2) mit eingelegtem Rückwärtsgang bzw. im Leerlauf befindet, anschließend wie erstmaliges Anfahren,
- sich das Fahrzeug (2) mit einer Geschwindigkeit im Bereich von 0 km/h bis 20 km/h bewegt und gleichzeitig ein Hindernis vor dem Fahrzeug (2) erfasst wird, und/oder
- sich das Fahrzeug (2) mit einer Geschwindigkeit im Bereich von 55 km/h bis 80 km/h bewegt und gleichzeitig ein Hindernis vor dem Fahrzeug (2) erfasst wird, und/oder
- sich das Fahrzeug (2) mit einer Geschwindigkeit im Bereich von 80 km/h bis zur maximalen Fahrzeuggeschwindigkeit bewegt.

8. Stoßfängersystem (12) nach Anspruch 6 oder 7, **dadurch gekennzeichnet, dass** die elektronische Steuerung (18) zum Erfassen des Zustands der Verriegelungseinrichtung (17) eingerichtet ist.

9. Stoßfängersystem (12) nach einem der Ansprüche 5 bis 8, **gekennzeichnet durch** wenigstens zwei Deformationselemente (10), über die der Querträger (8) mit weiteren Bauteilen des Fahrzeugs (2) verbunden ist.

## Claims

1. An arrangement (13) for absorbing kinetic energy acting on a front bumper (9) of a vehicle (2), especially a motor vehicle, having
- at least one pedestrian protection element (11) which can be arranged on a cross member (8) of the bumper (9),
- at least one absorption element (14, 15, 16) which can be arranged on the cross member (8) and can be arranged on the cross member (8) so as to be movable in the longitudinal direction of the vehicle (2) relative to the cross member (8) between a front absorption position and a rear release position, and
- at least one locking means (17) which can be arranged on the cross member (8), by means of which means the absorption element (14, 15, 16) can be temporarily locked in its absorption position,
- wherein the absorption element (14, 15, 16) in its absorption position is connected in parallel to the pedestrian protection element (11) with regard to an introduction of force into the bumper (9) caused by the kinetic energy,
**characterised by** at least two absorption elements (14, 16), with at least one absorption element (14) being arranged above the pedestrian protection element (11) and at least one further absorption element (16) being arranged below the pedestrian protection element (11).

2. An arrangement (13) according to Claim 1, **characterised in that** the absorption element (14, 15, 16) has a lower rigidity than the cross member (8) at least in the direction of the introduction of force.

3. An arrangement (13) according to Claim 1 or Claim 2, **characterised by** at least two absorption elements (14, 15, 16), with at least one absorption element (14, 16) being arranged above or below the pedestrian protection element (11) and at least one further absorption element (15) being able to be arranged in the region of an attachment of the cross member (8) to a further component of the vehicle (2) or of the bumper (9).

4. An arrangement (13) according to one of Claims 1 to 3, **characterised in that** the pedestrian protection element (11) is formed at least partially from a foam material.

5. A bumper system (12) for a vehicle (2), especially a motor vehicle, having at least one bumper (9) which can be arranged on the front of the vehicle (2) and comprises a cross member (8), **characterised by** at least one arrangement (13) according to one of Claims 1 to 5.

6. A bumper system (12) according to Claim 5, **characterised by** at least one electronic control means (18), by means of which the locking means (17) can be actuated, the electronic control (18) being set up to lock or unlock the locking means (17) dependent on a speed of the vehicle (2) and detection by a sensor of an obstacle arranged ahead of the vehicle (2).

7. A bumper system (12) according to Claim 6, **characterised in that** the electronic control means (18) is set up to transfer the locking means (17) exclusively from a release state which does not lock the absorption element (14, 15, 16) in its absorption position into a locked state which locks the absorption element (14, 15, 16) in its absorption position, if
- the vehicle (2) is in the parked state,
- the vehicle (2) when starting for the first time lies in the speed range 0 km/h to 20 km/h,
- the vehicle (2) has reverse gear engaged or is idling, then as starting for the first time,
- the vehicle (2) is moving at a speed in the range of 0 km/h to 20 km/h and at the same time an obstacle is detected ahead of the vehicle (2), and/or
- the vehicle (2) is moving at a speed in the range of 55 km/h to 80 km/h and at the same time an obstacle is detected ahead of the vehicle (2), and/or
- the vehicle (2) is moving at a speed in the range from 80 km/h to the maximum vehicle speed.

8. A bumper system (12) according to Claim 6 or Claim 7, **characterised in that** the electronic control means (18) is set up to detect the status of the locking means (17).

9. A bumper system (12) according to one of Claims 5 to 8, **characterised by** at least two deformation elements (10), via which the cross member (8) is connected to further components of the vehicle (2).

## Revendications

1. Dispositif (13) permettant d'absorber de l'énergie cinétique agissant sur le pare-choc avant (9) d'un véhicule, en particulier d'un véhicule automobile comprenant :
- au moins un élément de protection des piétons (11) pouvant être monté sur une traverse (8) du pare-choc (9),
- au moins un élément d'absorption (14, 16) pouvant être monté sur la traverse (8) mobile, par rapport à celle-ci dans la direction longitudinale du véhicule (2), entre une position d'absorption avant et une position de libération arrière, et
- au moins un dispositif de verrouillage (17) pouvant être monté sur la traverse (8), au moyen duquel l'élément d'absorption (14, 15, 16) peut être bloqué temporairement dans sa position d'absorption,
- dans sa position d'absorption, l'élément d'absorption (14, 15, 16) étant positionné parallèlement à l'élément de protection des piétons (11) relativement à l'application dans le pare-choc (9) d'une force conditionnée par l'énergie cinétique,
**caractérisé par** au moins deux éléments d'absorption (14, 16), au moins un élément d'absorption (14) étant monté au-dessus de l'élément de protection des piétons (11) et au moins un autre élément d'absorption (16) étant monté au-dessous de l'élément de protection des piétons (11).

2. Dispositif (13) conforme à la revendication 1,
**caractérisé en ce qu'**
au moins dans la direction de l'application d'une force l'élément d'absorption (14, 15, 16) a une rigidité plus faible que la traverse (8).

3. Dispositif (13) conforme à la revendication 1 ou 2,
**caractérisé par**
au moins deux éléments d'absorption (14, 15, 16), au moins un élément d'absorption (14, 16) étant monté au-dessus ou au-dessous de l'élément de protection des piétons (11) et au moins un autre élément d'absorption (15) pouvant être monté dans la zone de la connexion de la traverse (8) à un autre composant du véhicule (2) ou du pare-choc (9).

4. Dispositif (13) conforme à l'une des revendications 1 à 3,
**caractérisé en ce que**
l'élément de protection des piétons (11) est réalisé au moins en partie en un matériau sous forme de mousse.

5. Système de pare-choc (12) destiné à un véhicule (2), en particulier à un véhicule automobile comportant au moins un pare-choc (9) comprenant une traverse (8) pouvant être monté à l'avant du véhicule (2),
**caractérisé par**
au moins un dispositif (13) conforme à l'une des revendications 1 à 4.

6. Système de pare-choc (12) conforme à la revendication 5,
**caractérisé par**
au moins une commande électronique (18) permettant de commander le dispositif de verrouillage (17), la commande électronique (18) étant réalisée pour permettre de verrouiller ou de déverrouiller le dispositif de verrouillage (17) en fonction de la vitesse du véhicule (2) et d'une détection par capteur d'un obstacle situé devant le véhicule (2).

7. Système de pare-choc (12) conforme à la revendication 6,
**caractérisé en ce que**
la commande électronique (18) est réalisée pour transférer exclusivement le dispositif de verrouillage (17) d'un état de libération ne bloquant pas l'élément d'absorption (14, 15, 16) dans sa position d'absorption dans un état de verrouillage bloquant l'élément d'absorption (14, 15, 16) dans sa position d'absorption, lorsque :
- le véhicule (2) est en stationnement,
- le véhicule (2) se trouve dans une plage de vitesse comprise entre 0 km/h et 20 km/h lors d'un premier démarrage,
- le véhicule (2) se trouve dans un état dans lequel la marche arrière est engagée ou en marche à vide, après un premier démarrage,
- le véhicule (2) se déplace avec une vitesse située dans la plage de 0 km/h à 20 km/h et, simultanément un obstacle est détecté devant le véhicule (2), et/ou
- le véhicule (2) se déplace avec une vitesse située dans la zone de 55 km/h à 80 km/h et simultanément un obstacle est détecté à l'avant du véhicule (2), et/ou
- le véhicule (2) se déplace à une vitesse située dans la plage de 80 km/h à sa vitesse de déplacement maximum.

8. Système de pare-choc (12) conforme à la revendication 6 ou 7,
**caractérisé en ce que**
la commande électronique (18) est réalisée pour permettre de détecter l'état du dispositif de verrouillage (17).

9. Système de pare-choc (12) conforme à l'une des revendications 5 à 8,
**caractérisé par**
au moins deux éléments de déformation (10) par l'intermédiaire desquels la traverse (8) est reliée à d'autres composants du véhicule (2).
